# EUROPEAN PATENT APPLICATION

(11) **EP 4 525 149 A1**
(43) Date of publication of application: **19.03.2025**
(21) Application number: 23901031.7
(22) Date of filing: 04.12.2023
(51) Int. Cl.: H01M 50/204, H01M 10/658, H01M 10/04, H01M 10/6557, H01M 10/42, H01M 50/502, H01M 4/525, H01M 4/58, A62C 2/00, A62C 3/16

(54) **BATTERY PACK**

(30) Priority: 05.12.2022 KR 20220168151; 24.02.2023 KR 20230024931
(71) Applicant: LG Energy Solution, Ltd., Seoul 07335 (KR)
(72) Inventor: YANG, Chang Hyeon, Daejeon 34122 (KR); SHIN, Ju Hwan, Daejeon 34122 (KR); HUR, Nam Hoon, Daejeon 34122 (KR); SEONG, Jun Yeob, Daejeon 34122 (KR); LEE, Hyoung Suk, Daejeon 34122 (KR)
(74) Representative: Plasseraud IP
(86) International application number: PCT/KR2023/019808
(87) International publication number: WO 2024/123012

(57) **Abstract**

Provided is a battery pack according to example embodiments of the present technology. The battery pack includes a plurality of first battery devices mounted on a housing and spaced apart from each other and a plurality of second battery devices mounted on the housing and interposed between the plurality of first battery devices, in which each of the plurality of first battery devices includes a plurality of first battery cells including a first positive electrode active material and each of the plurality of second battery devices includes a plurality of second battery cells including a second positive electrode active material different from the first positive electrode active material.

## Description

### [Technical Field]

The present invention relates to a battery pack. The present application claims the benefit of priority based on Korean Patent Application No. 10-2022-0168151, filed on December 5, 2022 and Korean Patent Application No. 10-2023-0024931, filed on February 24, 2023, and the entire contents of the Korean patent applications are incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

As secondary batteries are used for mobility, the demand for the safety of secondary batteries is increasing. A driver's life may be in danger when an accident such as fire occurs in a secondary battery used for mobility and thus research on technology for enhancing the safety of secondary batteries is indispensable.

### [Disclosure]

### [Technical Problem]

The present invention is directed to providing a battery pack with improved safety.

### [Technical Solution]

To address the above-described problem, example embodiments of the present invention provide a battery pack. The battery pack includes a plurality of first battery devices mounted on a housing and spaced apart from each other and a plurality of second battery devices mounted on the housing and interposed between the plurality of first battery devices, in which each of the plurality of first battery devices includes a plurality of first battery cells including a first positive electrode active material and each of the plurality of second battery devices includes a plurality of second battery cells including a second positive electrode active material different from the first positive electrode active material.

The first positive electrode active material may include nickel and manganese.

The second positive electrode active material may include iron and phosphorus.

An area of each of the plurality of first battery devices may be different from an area of each of the second battery devices.

An area of each of the plurality of first battery devices may be smaller than an area of each of the second battery devices.

An area of each of the plurality of first battery devices may be greater than an area of each of the second battery devices.

Each of the plurality of first battery devices may include a first bus bar plate including a first positive terminal and a first negative terminal that are connected to each of the plurality of first battery cells.

Each of the plurality of second battery devices may include a second bus bar plate including a second positive terminal and a second negative terminal that are connected to each of the plurality of second battery cells.

Each of the plurality of first battery devices may include a thermal separator interposed between the plurality of first battery cells.

The thermal separator may include one of a ceramic material, coated glass fiber, calcium-silicate, aramid, and an expandable material.

The thermal separator may include a channel in which a refrigerant circulates.

The thermal separator may be configured to emit one of a fire retarding material and a fire extinguishing agent when adjacent ones among the plurality of first battery cells are in a thermal runway state.

Each of the plurality of second battery cells of each of the plurality of second battery devices may be in contact with neighboring one among the plurality of second battery cells.

Each of the plurality of second battery devices may not include a thermal separator.

The plurality of first battery devices may be spaced apart from each other with neighboring one among the plurality of second battery devices interposed therebetween.

### [Advantageous Effects]

According to example embodiments of the present invention, second battery devices may be arranged between first battery devices including first battery cells including nickel and manganese as positive electrode active materials. The second battery devices include second battery cells including phosphoric acid and iron as positive electrode active materials. In this case, the fire stability of the second battery cells is relatively high and thus the propagation of heat in a battery pack may be delayed. Furthermore, the first battery devices include a plurality of thermal separators between the first battery cells and the second battery devices do not include thermal separators, thus increasing energy efficiency of the battery pack.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a plan view for describing a battery pack according to example embodiments.
FIG. 2 is a cross-sectional view taken along line AA-AA' of FIG. 1.
FIG. 3 is a cross-sectional view taken along line BB-BB' of FIG. 1.
FIG. 4 is a plan view for describing a battery pack according to example embodiments.
FIG. 5 is a plan view for describing a battery pack according to example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts matching corresponding to the present invention on the basis of the principle that the inventor(s) of the application can appropriately define the terms or expressions to optimally explain the present invention.

Therefore, embodiments set forth herein and configurations illustrated in the drawings are only embodiments of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

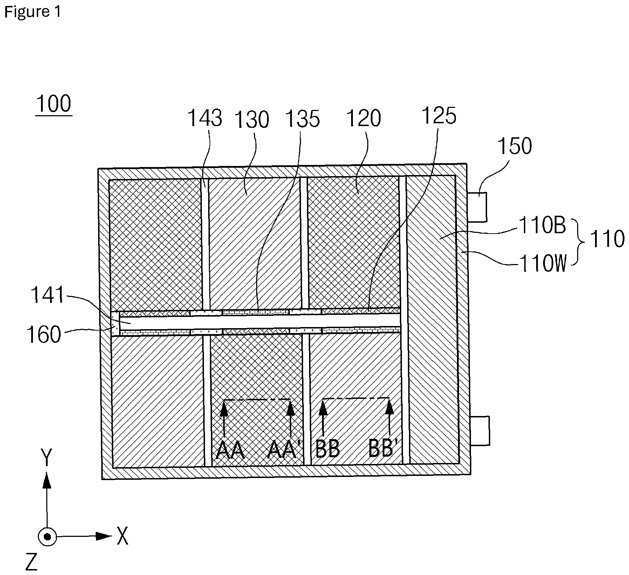

FIG. 1 is a plan view for describing a battery pack according to example embodiments.

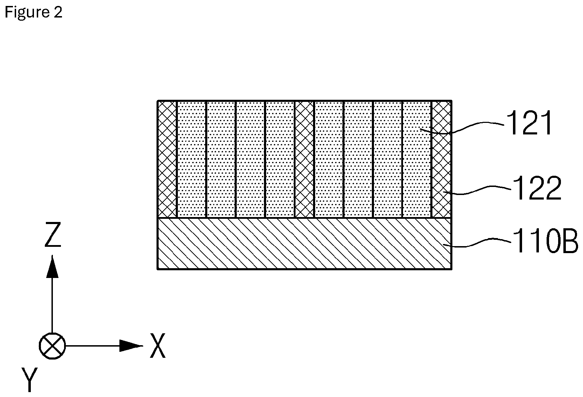

FIG. 2 is a cross-sectional view taken along line AA-AA' of FIG. 1.

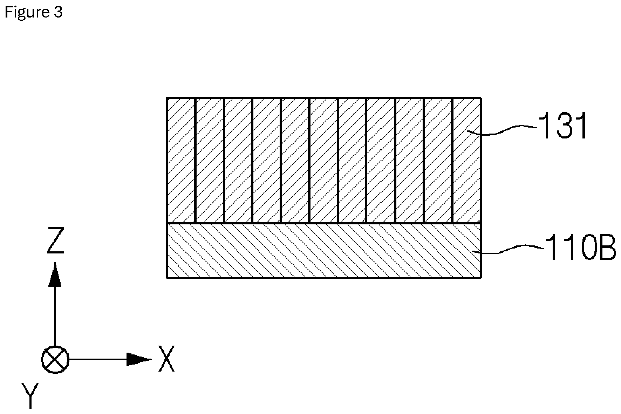

FIG. 3 is a cross-sectional view taken along line BB-BB' of FIG. 1.

Referring to FIGS. 1 to 3, a battery pack 100 may include a housing 110, a plurality of first battery devices 120, a plurality of second battery devices 130, a center beam 141, a plurality of cross-beams 143, a plurality of exhaust devices 150, and a plurality of bus bars 160. The battery pack 100 is a final form of a battery system mounted on a mobility or the like.

The housing 110 may provide a space for mounting the plurality of first battery devices 120 and the plurality of second battery devices 130. The housing 110 may include a bottom plate 110B and a plurality of side walls 110W.

Two directions substantially parallel to the bottom plate 110B of the housing 110 are defined as an X-axis direction and a Y-axis direction, and a direction substantially perpendicular to the bottom plate 110B of the housing 110 is defined as a Z-axis direction. The X-axis direction, the Y-axis direction, and the Z-axis direction may be substantially perpendicular to one another.

The plurality of first battery devices 120 and the plurality of second battery devices 130 may be disposed on the bottom plate 110B. The bottom plate 110B may support the plurality of first battery devices 120 and the plurality of second battery devices 130.

The plurality of side walls 110W may surround the plurality of first battery devices 120 and the plurality of second battery devices 130 horizontally. The plurality of side walls 110W may protect the plurality of first battery devices 120 and the plurality of second battery devices 130.

Each of the plurality of first battery devices 120 and the plurality of second battery devices 130 may be of a moduleless type. Each of the plurality of first battery devices 120 and the plurality of second battery devices 130 may not include a module frame.

Each of the plurality of first battery devices 120 may include a plurality of first battery cells 121 and a first bus bar plate 125. Each of the plurality of second battery devices 130 may include a plurality of second battery cells 131 and a second bus bar plate 135.

The plurality of first battery cells 121 and the plurality of second battery cells 131 are basic units of a lithium ion battery, i.e., a secondary battery. Each of the plurality of first battery cells 121 and the plurality of second battery cells 131 includes an electrode assembly, an electrolyte, and a case. Each of the plurality of first battery cells 121 and the plurality of second battery cells 131 is classified as a lithium ion battery, a lithium ion polymer battery, a lithium polymer battery, or the like according to a configuration of an electrode assembly and an electrolyte. A market share of lithium ion polymer batteries in the field of secondary battery is increasing due to a low possibility of leakage of an electrolyte and easiness in manufacturing.

Each of the plurality of first battery cells 121 and the plurality of second battery cells 131 may be one of a cylindrical battery cell, a prismatic battery cell, and a pouch type battery cell. An electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet.

An electrode assembly included in a battery case includes a positive electrode, a negative electrode, and a separator interposed between the positive electrode and the negative electrode. The electrode assembly may be classified as a jelly-roll type electrode assembly or a stack type electrode assembly according to a form of assembly. The jelly roll type electrode assembly is manufactured by winding a positive electrode, a negative electrode, and a separator interposed therebetween. The stack type electrode assembly includes a plurality of positive electrodes, a plurality of negative electrodes, and a plurality of separators interposed therebetween that are stacked sequentially.

The positive electrodes may each include a positive electrode current collector and a positive electrode active material. The negative electrodes may each include a negative electrode current collector and a negative electrode active material. A thickness of the positive electrode current collector may range from about 3 µm to about 500 µm. The positive electrode current collector may not cause a chemical change in a finally manufactured secondary battery and may have high conductivity. The positive electrode current collector may include, for example, stainless steel, aluminum, nickel, titanium, baked carbon, and aluminum. The positive electrode current collector may include stainless steel surface-treated with carbon, nickel, titanium, silver, or the like. A surface of the positive electrode current collector may include a fine uneven structure to increase the adhesion of the active material. The positive electrode current collector may be in the form of film, sheet, foil, net, porosity, foam, nonwoven fabric or the like.

A thickness of the negative electrode current collector may be in a range of about 3 µm to about 500 µm. The negative electrode current collector may not cause a chemical change in a finally manufactured secondary battery and may have high conductivity. The negative electrode current collector may include stainless steel, aluminum, nickel, titanium, baked carbon, and aluminum-cadmium alloy. The negative electrode current collector may include stainless steel surface-treated with carbon, nickel, titanium, silver, or the like. A surface of the negative electrode current collector may include a fine uneven structure to increase the adhesion of the active material. The negative electrode current collector may be in the form of film, sheet, foil, net, porosity, foam, nonwoven fabric or the like.

For example, the negative electrode active material may include, for example, carbon such as non-graphitized carbon or graphite-based carbon. The negative electrode active material may include, for example, a metal composite oxide such as LiₓFe₂O₃ (0≤x≤1), LixWO₂ (0≤x≤1), or SnₓMe₁₋ₓMe'_{y}O_{z} (here, Me is one of Mn, Fe, Pb, and Ge, Me' is one of Al, B, P, Si, a Group I element, a Group II element, a Group III element of the periodic table, and a halogen, 0<x≤1, 1≤y≤3, and 1≤z≤8). The negative electrode active material may include, for example, lithium metal, lithium alloy, silicon-based alloy, and tin-based alloy. The negative electrode active material may include, for example, a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅. The negative electrode active material may include, for example, a conductive polymer such as polyacetylene, a Li-Co-Ni-based material, etc.

According to example embodiments, each of the plurality of first battery cells 121 may include a first positive electrode active material. According to example embodiments, each of the plurality of second battery cells 131 may include a second positive electrode active material. According to example embodiments, the first positive electrode active material may be different from the second positive electrode active material. Here, the first and second positive electrode active materials are materials causing an electrochemical reaction. The first and second positive electrode active materials may be lithium transition metal oxides.

According to example embodiments, the first positive electrode active material may contain a layered structure. According to example embodiments, the first positive electrode active material may include nickel and manganese. According to example embodiments, the first positive electrode active material may include, for example, a layered compound substituted with one or more transition metals, such as a lithium cobalt oxide (LiCoO₂) or lithium nickel oxide (LiNiO₂); a lithium manganese oxide substituted with one or more transition metals; a lithium nickel-based oxide expressed by a chemical formula of LiNi_{1-y}M_{y}O₂ (here, M is one of Co, Mn, Al, Cu, Fe, Mg, B, Cr, Zn and Ga, and 0.01≤y≤0.7); or a lithium-nickel-cobalt-manganese compound oxide expressed by Li_{1+z}Ni_{b}Mn_{c}Co_{1-(b+c+d)}M_{d}O₍₂₋ₑ₎Aₑ such as Li_{1+z}Ni_{1/3}Co_{1/3}Mn_{1/3}O₂ or Li_{1+zN}i_{0.4}Mn_{0.4}CO_{0.2}O₂ (here, -0.5≤z≤0.5, 0.1≤b≤0.8, 0.1≤c≤0.8, 0≤d≤0.2, 0≤e≤0.2, b+c+d<1, M is one of Al, Mg, Cr, Ti, Si and Y, and A is one of F, P and Cl).

According to example embodiments, the second positive electrode active material may include an olivine structure. According to example embodiments, the second positive electrode active material may include iron and phosphorus. According to example embodiments, the second positive electrode active material may include an olivine-based lithium metal phosphate expressed by a chemical formula of Li₁₊ₓM_{1-y}M'_{y}PO_{4-z}X_{z} (here, M is a transition metal, and particularly, Fe, Mn, Co or Ni, M' is Al, Mg or Ti, X is F, S or N, - 0.5≤x≤+0.5, 0≤y≤0.5, and 0≤z≤0.1).

According to example embodiments, the energy density of each of the plurality of first battery cells 121 may be higher than that of each of the plurality of second battery cells 131. According to example embodiments, the safety and stability of each of the plurality of second battery cells 131 may be higher than those of each of the plurality of first battery cells 121. According to example embodiments, the lifespan of each of the plurality of first battery cells 121 may be shorter than that of each of the plurality of second battery cells 131.

The second positive electrode active material having the olivine structure has a lattice structure in which crystal-shaped hexahedra are organically connected to each other and thus is better than the first positive electrode active material in terms of lifespan and fire stability. Meanwhile, the first positive electrode active material has higher energy density than the second positive electrode active material and particularly has superior low-temperature performance compared to the second positive electrode active material.

Each of the plurality of first battery cells 121 may include a first positive electrode tab and a first negative electrode tab. Each of the plurality of first battery cells 121 may further include a first positive electrode lead and a first negative electrode lead for connection with the outside. Each of the plurality of first battery cells 121 may be connected to a first positive electrode lead of a following first battery cell 121. The first negative electrode lead of each of the plurality of first battery cells 121 may be welded to the first positive electrode lead of the following first battery cell 121. Accordingly, the plurality of first battery cells 121 may be connected in series, and each of the plurality of first battery devices 120 may be configured to output a high voltage.

Each of the plurality of second battery cells 131 may include a second positive electrode tab and a second negative electrode tab. Each of the plurality of second battery cells 131 may further include a second positive electrode lead and a second negative electrode lead for connection with the outside. The second negative electrode lead of each of the plurality of second battery cells 131 may be connected to the second positive electrode lead of the following second battery cell 131. The second negative electrode lead of each of the plurality of second battery cells 131 may be welded to the second positive electrode lead of the following second battery cell 131. Accordingly, the plurality of second battery cells 131 may be connected in series, and each of the plurality of second battery devices 130 may be configured to output a high voltage.

The first bus bar plate 125 may include a first positive terminal and a first negative terminal. The first positive terminal and the first negative terminal may have a rod shape (or a rod shape including a bent part) similar to a bus bar but are not limited thereto. The first positive terminal may be connected to the first positive electrode lead of leading one among the plurality of first battery cells 121 connected in series, and the first negative terminal may be connected to the first negative electrode lead of last one among the plurality of first battery cells 121 connected in series.

Each of the plurality of first battery devices 120 may include one first bus bar plate 125. The plurality of first battery cells 121 of each of the plurality of first battery devices 120 may be connected to the first bus bar plate 125 and may operate together.

The second bus bar plate 135 may include a second positive terminal and a second negative terminal. The second positive terminal and the second negative terminal may have a rod shape similar to a bus bar but are not limited thereto. The second positive terminal may be connected to the second positive electrode lead of leading one among the plurality of second battery cells 131 connected in series, and second negative terminal may be connected to the second negative electrode lead of last one among the plurality of second battery cells 131 connected in series.

Each of the plurality of second battery devices 130 may include one second bus bar plate 135. The plurality of second battery cells 131 of each of the plurality of second battery devices 130 may be connected to the second bus bar plate 135 and may operate together.

According to example embodiments, each of the plurality of first battery devices 120 may further include a plurality of thermal separators 122. A plurality of thermal separators 122 may be interposed between the plurality of first battery cells 121. Thus, some of the plurality of first battery devices 120 may be in contact with the plurality of thermal separators 122.

According to example embodiments, the plurality of thermal separators 122 may divide the plurality of first battery cells 121 into two or more groups, and thus, the propagation of a thermal runaway event occurring in one group to another group may be delayed or prevented.

### <Example of Thermal Barrier>

According to example embodiments, the plurality of thermal separators 122 may be thermal barriers. According to example embodiments, each of the plurality of thermal separators 122 may have a high melting temperature. According to example embodiments, each of the plurality of thermal separators 122 may have low thermal conductivity.

According to example embodiments, melting temperature of each of the plurality of thermal separators 122 may be about 300 °C or higher. According to example embodiments, melting temperature of each of the plurality of thermal separators 122 may be about 600 °C or higher. According to example embodiments, melting temperature of each of the plurality of thermal separators 122 may be about 1000 °C or higher. According to example embodiments, melting temperature of each of the plurality of thermal separators 122 may be about 1500 °C or higher.

According to example embodiments, thermal conductivity of each of the plurality of thermal separators 122 may be about 20 W/mK or less. According to example embodiments, thermal conductivity of each of the plurality of thermal separators 122 may be about 1 W/mK or less. According to example embodiments, thermal conductivity of each of the plurality of thermal separators 122 may be about 0.3 W/mK or less. The thermal conductivity of each of the plurality of thermal separators 122 described above may be measured at room temperature (about 25 °C).

According to example embodiments, each of the plurality of thermal separators 122 may include a ceramic material such as aluminum oxide (alumina), magnesium oxide (magnesia), silicon dioxide (silica), silicon nitride, silicon carbide (carborundum), and alumina silicate. According to example embodiments, each of the plurality of thermal separators 122 may include one of calcium-silicate, calcium-magnesium-silicate, and aramid. According to example embodiments, each of the plurality of thermal separators 122 may include, for example, glass fiber coated with one of a silicon, acrylic, vermiculite, graphite, and polytetrafluoroethylene (PTFE).

According to example embodiments, each of the plurality of thermal separators 122 may include an expandable material. Here, the expandable material is a material that increases in volume when exposed to heat. The expansion of the volume of the expandable material may cause the isolation of an object to be protected (e.g., first battery cells 121) from a fire source (e.g., first battery cells 121 in which a thermal runaway event occurs). Fire extinguishment by the expandable material is generally referred to as manual fire extinguishment, and typical examples of the expandable material are a silicone and an acrylic.

### <Example of Cooling Member>

According to example embodiments, each of the plurality of thermal separators 122 may include a fluid circulation system, e.g., a cooling plate, to dissipate or absorb heat from the plurality of first battery cells 121, as well as physically and thermally isolating groups of first battery cells 121. According to example embodiments, each of the plurality of thermal separators 122 may include a channel through which a fluid (i.e., a refrigerant) such as water or a glycol-water mixture flows.

### <Example of Fire Extinguishing Member>

According to example embodiments, each of the plurality of thermal separators 122 may be configured to emit a fire retarding material or a fire extinguishing agent when a thermal runaway event occurs in adjacent first battery cells 121 among the plurality of first battery cells 121.

Here, the fire extinguishing agent is a substance that extinguishes fire and preferably suppresses combustion and/or blocks the occurrence of fire. The extinguishing of the fire is an action that blocks fire and should be understood as an action that suppresses or weakens the continuity of fire that has already occurred or the occurrence of new fire. The fire extinguishing agent is a substance that isolates a chemical reactant necessary for the continuation of fire from a fire source or suppresses a chemical reaction necessary for ignition or the continuation of fire. Preferably, the fire extinguishing agent may include a fire extinguishing additive and a solvent (or a carrier material).

For example, the fire extinguishing agent may include carbon dioxide, nitrogen, and argon. As another example, the fire extinguishing agent may include one of fluoroform, haloform, halocarbon, heptanfluoropropane, bromotrifluoromethane, and bromochlorodifluoromethane.

FIG. 2 illustrates that four first battery cells 121 form one group and such groups and the plurality of thermal separators 122 are alternately arranged but is intended to provide an example only and should not be understood as limiting the technical idea of the present invention in any sense. The plurality of first battery cells 121 may be divided into groups including an arbitrary number of first battery cells 121, and the numbers of first battery cells 121 included in the respective groups may be different from each other.

According to example embodiments, each of the plurality of second battery cells 131 may not include a thermal separator. According to example embodiments, each of the plurality of second battery cells 131 may be in contact with a neighboring one among the plurality of second battery cells 131. According to example embodiments, each of the plurality of second battery cells 131 may be isolated from the plurality of thermal separators 122. According to example embodiments, each of the plurality of second battery cells 131 may not be in contact with the plurality of thermal separators 122.

Although not clearly illustrated, a metal strap and a thermal interface material (TIM) may be further interposed between the plurality of first battery cells 121 and the bottom plate 110B, between the plurality of thermal separators 122 and the bottom plate 110B, and between the plurality of second battery cells 131 and the bottom plate 110B. Sheet containing an insulating material may be further disposed on upper surfaces of the plurality of first battery cells 121, upper surfaces of the plurality of thermal separators 122, and upper surfaces of the plurality of second battery cells 131.

According to example embodiments, each of the plurality of first battery devices 120 may further include a first end plate covering the first bus bar plate 125. According to example embodiments, each of the plurality of second battery devices 130 may further include a second end plate covering the second bus bar plate 135.

The plurality of first battery devices 120 and the plurality of second battery devices 130 may be alternately arranged in the X-axis direction. The plurality of second battery devices 130 may be interposed between neighboring ones among the plurality of first battery devices 120. The plurality of first battery devices 120 and the plurality of second battery devices 130 may be alternately arranged in the Y-axis direction. In FIG. 1, the number of first battery devices 120 and second battery devices 130 arranged in the X-axis direction is three, and the number of first battery devices 120 and second battery devices 130 arranged in the Y-axis direction is two. Therefore, an array of the plurality of first battery devices 120 and the plurality of second battery devices 130 may be referred to as a 3*2 array.

The plurality of first battery devices 120 and the plurality of second battery devices 130 that are arranged in an M*N array (here, M and N are each an integer of 2 or more) will be easily derived by those of ordinary skill in the art, based on the above description.

According to example embodiments, in the X-axis direction, corresponding one of the plurality of second battery devices 130 may be arranged between two neighboring first battery devices 120 among the plurality of first battery devices 120. According to example embodiments, in the X-axis direction, corresponding one of the plurality of first battery devices 120 may be arranged between two neighboring second battery devices 130 among the plurality of second battery devices 130. According to example embodiments, in the Y-axis direction, corresponding one of the plurality of second battery devices 130 may be arranged between two neighboring first battery devices 120 among the plurality of first battery devices 120. According to example embodiments, in the Y-axis direction, corresponding one of the plurality of first battery devices 120 may be arranged between two neighboring second battery devices 130 among the plurality of second battery devices 130.

According to example embodiments, each of the plurality of first battery devices 120 may face the side wall 110W and one of the plurality of second battery devices 130. Each of the plurality of first battery devices 120 may not face the other first battery devices 120.

According to example embodiments, each of the plurality of second battery devices 130 may face the side wall 110W and one of the plurality of first battery devices 120. Each of the plurality of second battery devices 130 may not face the other second battery devices 130.

The plurality of exhaust devices 150 may be coupled to one of the side walls 110W. The side wall 110W coupled to the plurality of exhaust devices 150 may include ventilation holes. The ventilation holes may be configured to provide a path for discharging a gas and heat from the inside of the battery pack 100.

The plurality of exhaust devices 150 may be configured to delay thermal propagation by discharging a high-temperature gas from the inside of the battery pack 100 to the outside when at least one of the plurality of first battery devices 120 and the plurality of second battery devices 130 is in a thermal runway state.

Here, the thermal runaway state of each of the plurality of first battery devices 120 and the plurality of second battery devices 130 is a state in which a change of temperature of each of the plurality of first battery devices 120 and the plurality of second battery devices 130 further accelerates the change of the temperature, and is uncontrollable positive feedback. The plurality of first battery devices 120 and the plurality of second battery devices 130 that are in the thermal runaway state exhibit a rapid change of temperature thereof and discharge a large amount of a high-pressure gas and combustion debris.

The center beam 141 and the plurality of cross-beams 143 may isolate elements on the housing 110 from each other. Accordingly, the center beam 141 and the plurality of cross-beams 143 may protect the plurality of first battery devices 120 and the plurality of second battery devices 130 and prevent an undesired short circuit from occurring therebetween.

The center beam 141 may extend between a pair of side walls 110W facing each other. The center beam 141 may extend in the X-axis direction. The center beam 141 may be in contact with one of the pair of side walls 110W facing each other. The center beam 141 may isolate the plurality of first battery devices 120 from the plurality of second battery devices 130. The center beam 141 may be interposed between the plurality of first battery devices 120 and the plurality of second battery devices 130.

According to example embodiments, the plurality of cross-beams 143 may extend in a direction (e.g., the Y-axis direction) perpendicular to the center beam 141. According to example embodiments, the plurality of cross-beams 143 may extend between the center beam 141 and the side walls 110W. According to example embodiments, the plurality of cross-beams 143 may be in contact with the center beam 141 and the side walls 110W. The plurality of cross-beams 143 may isolate the plurality of first battery devices 120 from the plurality of second battery devices 130. The plurality of cross-beams 143 may be interposed between the plurality of first battery devices 120 and the plurality of second battery devices 130.

An array of the center beam 141 and the cross-beams 143 shown in FIG. 1 and an array of the plurality of first battery devices 120 and the plurality of second battery devices 130 are non-limiting examples and thus do not limit the technical idea of the present invention in any sense. A battery pack that includes various numbers and arrays of a center beam, cross-beams, first battery devices, and second battery devices will be easily derived by those of ordinary skill in the art, based on the above description.

The battery pack 100 may further include electronic components. The electronic components may be on the housing 110. The electronic components may be disposed between the side walls 110W on which the exhaust devices 150 are installed, the plurality of first battery devices 120 and the plurality of second battery devices 130. The electronic components may include an electronic device required to drive the battery pack 100.

The electronic components may include, for example, a battery management system (BMS). The BMS may be configured to monitor, balance, and control the battery pack 100. The monitoring of the battery pack 100 may include measuring voltages and currents at certain nodes inside the plurality of first battery devices 120 and the plurality of second battery devices 130, and measuring temperatures at set positions inside the battery pack 100. The battery pack 100 may include measuring instruments for measuring voltages, currents, and temperatures as described above.

The balancing of the battery pack 100 is an operation of reducing a deviation between the plurality of first battery devices 120 and the plurality of second battery devices 130. The controlling of the battery pack 100 includes preventing overcharging, over-discharging, and overcurrent. Through monitoring, balancing, and controlling, the battery pack 100 may be operated under optimal conditions, thereby preventing the lifespan of each of the plurality of first battery devices 120 and the plurality of second battery devices 130 from being shortened.

The electronic components may further include a cooling device, a power relay assembly (PRA), a safety plug, etc. The cooling device may include a cooling fan. The cooling fan may circulate air in the battery pack 100 to prevent overheating of each of the plurality of first battery devices 120 and the plurality of second battery devices 130. The PRA may be configured to supply or cut off power from a high-voltage battery to an external load (e.g., a motor). The PRA may cut off power supply to an external load (e.g., a motor) to protect the plurality of first battery devices 120, the plurality of second battery devices 130, and the external load (e.g., a motor), when abnormal voltage such as voltage surge occurs.

The plurality of bus bars 160 may electrically connect the plurality of first battery devices 120 and the plurality of second battery devices 130. The plurality of bus bars 160 may be connected to the first positive terminal and the first negative terminal of the first bus bar plate 125 and the second positive terminal and the second negative terminal of the second bus bar plate 135.

The plurality of first battery devices 120 may be connected to two adjacent second battery devices 130 among the plurality of second battery devices 130 by the plurality of bus bars 160. The plurality of second battery devices 130 may be connected to two adjacent first battery devices 120 among the plurality of second battery devices 130 by the plurality of bus bars 160. The plurality of first battery devices 120 and the plurality of second battery devices 130 may be connected in series by the plurality of bus bars 160, and thus, the battery pack 100 may apply a high voltage to the outside.

The battery pack 100 may further include a lid plate coupled to the housing 110. The lid plate may cover elements inside the battery pack 100 such as the first and second battery devices 120 and 130and electronic components. The lid plate may be fixed to the battery pack 100 by a mechanical coupling means, e.g., a bolt.

### (Second Embodiment)

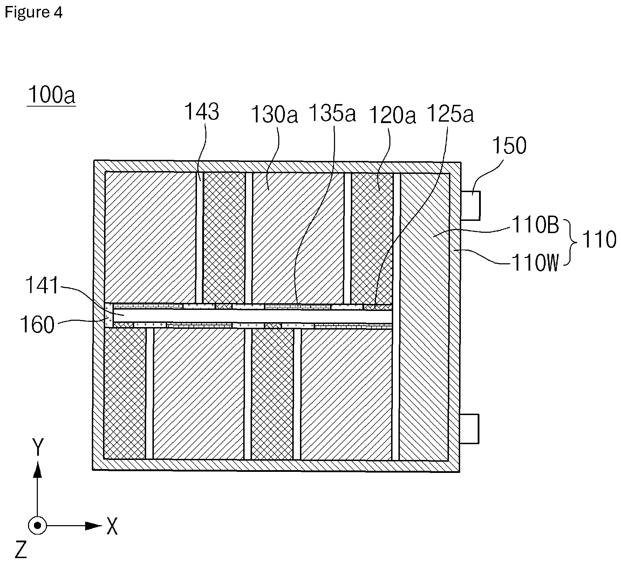

FIG. 4 is a plan view for describing a battery pack 100a according to example embodiments.

Referring to FIG. 4, the battery pack 100a may include a housing 110, a plurality of first battery devices 120a, a plurality of second battery devices 130b, a center beam 141, a plurality of cross-beams 143, a plurality of exhaust devices 150, and a plurality of bus bars 160.

The housing 110, the center beam 141, the plurality of cross-beams 143, the plurality of exhaust devices 150, and the plurality of bus bars 160 are substantially the same as those described above with reference to FIGS. 1 to 3 and thus a redundant description thereof is omitted here.

The plurality of first battery devices 120a may include a plurality of first battery cells 121 (see FIG. 2), thermal separators 122 (see FIG. 2), and a first bus bar plate 125a. The plurality of second battery devices 130a may include a plurality of second battery cells 131 (see FIG. 3) and a first bus bar plate 125a. The plurality of second battery devices 130a may not include thermal separators.

According to example embodiments, the plurality of first battery devices 120a and the plurality of second battery devices 130a are substantially the same except sizes thereof.

According to example embodiments, a horizontal area of each of the plurality of first battery devices 120a may be different from that of each of the plurality of second battery devices 130a. According to example embodiments, the horizontal area of each of the plurality of first battery devices 120a may be smaller than that of each of the plurality of second battery devices 130a.

According to example embodiments, isolation between the plurality of first battery devices 120a may be ensured by providing the plurality of second battery devices 130a each having a horizontal area greater than a horizontal area of each of the plurality of first battery devices 120a. Accordingly, safety of the battery pack 100a can be improved.

### (Third Embodiment)

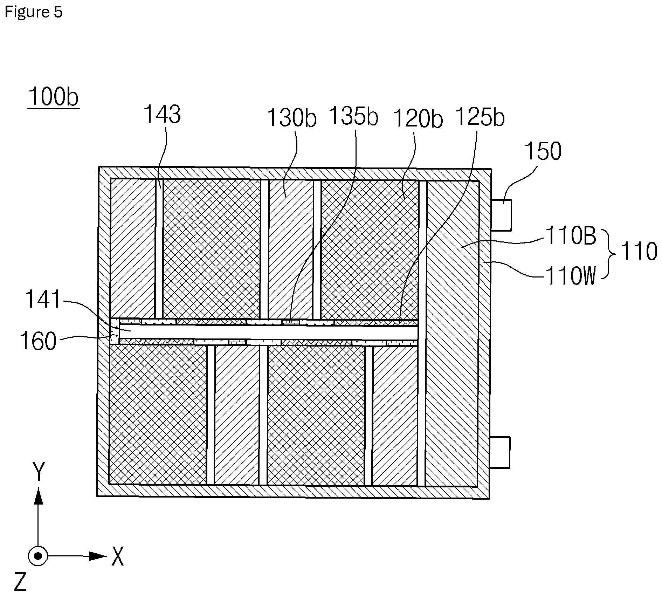

FIG. 5 is a plan view for describing a battery pack 100b according to example embodiments.

Referring to FIG. 5, the battery pack 100b may include a housing 110, a plurality of first battery devices 120b, a plurality of second battery devices 130b, a center beam 141, a plurality of cross-beams 143, a plurality of exhaust devices 150, and a plurality of bus bars 160.

The housing 110, the center beam 141, the plurality of cross-beams 143, the plurality of exhaust devices 150, and the plurality of bus bars 160 are substantially the same as those described above with reference to FIGS. 1 to 3 and thus a redundant description thereof is omitted here.

The plurality of first battery devices 120b may include a plurality of first battery cells 121 (see FIG. 2), thermal separators 122 (see FIG. 2), and a first bus bar plate 125b. The plurality of second battery devices 130b may include a plurality of second battery cells 131 (see FIG. 3) and a first bus bar plate 125b. The plurality of second battery devices 130b may not include thermal separators.

According to example embodiments, the plurality of first battery devices 120b and the plurality of second battery devices 130b are substantially the same except sizes thereof.

According to example embodiments, a horizontal area of each of the plurality of first battery devices 120b may be different from that of each of the plurality of second battery devices 130b. According to example embodiments, the horizontal area of each of the plurality of first battery devices 120b may be larger than that of each of the plurality of second battery devices 130b.

According to example embodiments, the stability of the battery pack 100b can be increased by disposing the plurality of second battery devices 130b between the plurality of first battery devices 120b, and the energy density of the battery pack 100b can be increased by providing the plurality of first battery devices 120b each having a horizontal area greater than that of each of the plurality of second battery devices 130b.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery pack comprising:
a plurality of first battery devices mounted on a housing and spaced apart from each other; and
a plurality of second battery devices mounted on the housing and interposed between the plurality of first battery devices,
wherein each of the plurality of first battery devices includes a plurality of first battery cells including a first positive electrode active material, and
each of the plurality of second battery devices includes a plurality of second battery cells including a second positive electrode active material different from the first positive electrode active material.

2. The battery pack of claim 1, wherein the first positive electrode active material includes nickel and manganese.

3. The battery pack of claim 1, wherein the second positive electrode active material includes iron and phosphorus.

4. The battery pack of claim 3, wherein an area of each of the plurality of first battery devices is different from an area of each of the second battery devices.

5. The battery pack of claim 3, wherein an area of each of the plurality of first battery devices is smaller than an area of each of the second battery devices.

6. The battery pack of claim 3, wherein an area of each of the plurality of first battery devices is greater than an area of each of the second battery devices.

7. The battery pack of claim **1,** wherein each of the plurality of first battery devices includes a first bus bar plate including a first positive terminal and a first negative terminal that are connected to each of the plurality of first battery cells, and
each of the plurality of second battery devices includes a second bus bar plate including a second positive terminal and a second negative terminal that are connected to each of the plurality of second battery cells.

8. The battery pack of claim **1,** wherein each of the plurality of first battery devices includes a thermal separator interposed between the plurality of first battery cells.

9. The battery pack of claim 8, wherein the thermal separator includes one of a ceramic material, coated glass fiber, calcium-silicate, aramid, and an expandable material.

10. The battery pack of claim 8, wherein the thermal separator includes a channel in which a refrigerant circulates.

11. The battery pack of claim 8, wherein the thermal separator is configured to emit one of a fire retarding material and a fire extinguishing agent when some of the plurality of first battery cells are in a thermal runway state.

12. The battery pack of claim 8, wherein each of the plurality of second battery devices comprises a pressure pad interposed between the plurality of second battery cells.

13. The battery pack of claim 12, wherein thermal conductivity of the pressure pad is higher than thermal conductivity of the thermal separator, and
melting temperature of the pressure pad is lower than melting temperature of the thermal separator.

14. The battery pack of claim 1, wherein each of the plurality of second battery cells of each of the plurality of second battery devices is in contact with neighboring one among the plurality of second battery cells.

15. The battery pack of claim 1, wherein the plurality of first battery devices are spaced apart from each other with neighboring one among the plurality of second battery devices interposed therebetween.
